# FASCICULE DE BREVET EUROPEEN

(11) **EP 3 704 075 B1**
(45) Date de publication et mention de la délivrance du brevet: **10.07.2024**
(21) Numéro de dépôt: 18800711.6
(22) Date de dépôt: 22.10.2018
(51) Int. Cl.: C04B 28/02, C04B 28/08, C04B 28/14, C04B 28/18, C04B 7/153, C04B 7/24

(54) **COMPOSITION DE MORTIER A BASE DE LAITIER ACTIVE PAR UN SOUS-PRODUIT**
MÖRTELZUSAMMENSETZUNG AUF BASIS VON DURCH EIN NEBENPRODUKT AKTIVIERTER SCHLACKE
MORTAR COMPOSITION BASED ON SLAG ACTIVATED BY A BY-PRODUCT

(30) Priorité: 30.10.2017 FR 1760236
(43) Date de publication de la demande: 09.09.2020
(73) Titulaire: SAINT-GOBAIN WEBER, 94370 Sucy-en-Brie (FR)
(72) Inventeur: LAMBERET, Séverine, 01320 Chalamont (FR); BURTIN, Jean-Claude, 01000 Saint Denis Les Bourg (FR); GOMES, José, 01851 Marboz (FR)
(74) Mandataire: Saint-Gobain Recherche
(86) Numéro de dépôt international: PCT/FR2018/052620
(87) Numéro de publication internationale: WO 2019/086781

(56) Documents cités:
- EP-A1- 0 994 196
- WO-A1-2015/020623
- CN-A- 104 557 104
- FR-A1- 2 630 432
- FR-A1- 2 943 665
- FR-A1- 2 952 050
- RU-C2- 2 229 449
- DATABASE WPI Week 201163, Derwent World Patents Index; AN 2011-M10578, XP002781402
- M. CONJEAUD ET AL: "A new steel slag for cement manufacture: Mineralogy and hydraulicity", CEMENT AND CONCRETE RESEARCH., vol. 11, no. 1, 1 January 1981 (1981-01-01), US, pages 85 - 102, XP055478202, ISSN: 0008-8846, DOI: 10.1016/0008-8846(81)90012-0
- MARAFI M ET AL: "Spent catalyst waste management: A review", RESOURCES, CONSERVATION AND RECYCLING, ELSEVIER, AMSTERDAM, NL, vol. 52, no. 6, 1 April 2008 (2008-04-01), pages 859 - 873, XP022595323, ISSN: 0921-3449, [retrieved on 20080403], DOI: 10.1016/J.RESCONREC.2008.02.004

## Description

La présente invention porte sur une composition sèche de mortier comprenant comme liant hydraulique un dérivé d'aluminosilicate de calcium activé par un sous-produit de l'industrie. La présente invention porte également sur un procédé de préparation d'un mortier-colle par gâchage de ladite composition de mortier sèche.

Il existe aujourd'hui sur le marché des formulations de mortiers notamment pour colle à carrelage qui comprennent des liants hydrauliques à base de dérivés d'aluminosilicates de calcium comme des laitiers de haut fourneau activés. Ces liants permettent notamment de limiter la quantité de ciment Portland dans les formulations de mortier-colle et par conséquent de diminuer également l'empreinte carbone de ces produits. En effet les procédés de fabrication de clinker nécessitent des opérations de décarbonatation, de calcination, de clinkérisation et de chauffage, notamment à des températures très élevées de l'ordre de 1450°C. Les ciments Portland et les ciments alumineux sont par exemple à l'origine de l'émission d'environ 800 kg de CO₂ par tonne de ciment produit. Ils sont également consommateurs de ressources énergétiques et naturelles. Des formulations pauvres en ciment Portland, par exemple comprenant moins de 1% en poids de ciment par rapport à la composition totale, permettent de réduire fortement l'empreinte CO₂ et de s'affranchir du marquage sécurité « produit corrosif ». En revanche, certaines formulations à base de laitier de haut fourneau activé par des ciments Portland et/ou des ciments alumineux peuvent avoir des performances limitées à basses températures, en raison d'une faible réactivité, notamment à des températures froides, inférieures à 10°C. On cherche par conséquent à améliorer encore cette réactivité à basse température.

Le document FR2952050 divulgue une composition de mortier comprenant un liant hydraulique comprenant au moins un dérivé d'aluminosilicate de calcium (un laitier de haut-fourneau granulé broyé) et au moins une source de sulfate de calcium, des microparticules de laitier d'une finesse supérieure ou égale à 6000 Blaine, au moins une base en une quantité inférieure ou égale à 1% du poids totale du liant et des granulats et/ou des fillers.

C'est dans ce cadre que s'inscrit la présente invention qui propose une composition de mortier sèche à base de dérivés d'aluminosilicates de calcium, qui comprend comme activateur un laitier riche en élément aluminium, dénommé ci-après laitier alumineux, qui est un sous-produit de l'industrie.

La présente invention porte sur une composition sèche de mortier comprenant :
- un liant hydraulique comprenant au moins un dérivé d'aluminosilicate de calcium, au moins un laitier alumineux granulé broyé comprenant moins de 30% en poids de silice, la quantité totale de dérivé d'aluminosilicate de calcium, autre que le laitier alumineux, étant comprise entre 5 et 60% en poids par rapport à la composition sèche de mortier et la quantité totale de laitier alumineux granulé broyé étant comprise entre 0,1 et 5% du poids total de la composition sèche de mortier, et au moins une source de sulfate de calcium,
- des granulats et/ou des fillers, et
- au moins une base en une quantité inférieure ou égale à 0,5% du poids total de la composition sèche de mortier.

Au sens de la présente invention, on entend par « laitier alumineux » un laitier dont l'alumine est le constituant le plus abondant.

Dans ce document, les compositions chimiques élémentaires sont données en % massiques équivalents d'oxyde. Par exemple, dire qu'une substance contient X% d'alumine signifie que cette substance contient l'élément aluminium en quantité équivalente à celle apportée par X% d'alumine; cela ne signifie pas nécessairement que la substance contient de l'alumine en tant que composé chimique ou constituant minéralogique.

Un laitier est un sous-produit d'un procédé industriel mettant en oeuvre la fusion d'une matière de départ, fusion destinée à séparer des métaux d'une phase d'oxydes, cette dernière étant appelée « laitier ».

Au sens de la présente invention, le terme granulé signifie que le laitier alumineux fondu a subi une trempe thermique à l'eau ayant pour conséquence l'obtention de grains en général majoritairement amorphes. Le laitier granulé est ensuite broyé afin de l'activer, comme expliqué plus en détail dans la suite du texte.

Le laitier alumineux granulé broyé comprend de préférence entre 30% en poids et 60% en poids, notamment de 30 à 50% en poids, de préférence entre 32 et 45% en poids, d'alumine, voire entre 35 et 43% en poids d'alumine.

Avantageusement, la teneur en silice du laitier alumineux granulé broyé est comprise entre 5 et 25% en poids, voire même entre 10 et 20% en poids par rapport à l'ensemble des composants du laitier alumineux granulé. De façon préférée, le laitier alumineux granulé broyé comprend entre 12 et 18 % en poids de silice.

De préférence, le laitier alumineux granulé comprend également de la chaux (CaO). La teneur en chaux est inférieure à la teneur en alumine - comme indiqué ci-avant ; elle est de préférence comprise entre 20 et 40% en poids, notamment entre 25 et 35% en poids.

Afin de ne pas impacter négativement les propriétés d'activation du laitier alumineux, la teneur en oxyde de fer dans le laitier alumineux est de préférence inférieure à 5% en poids, notamment inférieure à 3% en poids, et même inférieure à 2% en poids.

Le laitier alumineux granulé broyé est avantageusement majoritairement, voire totalement, amorphe. Le taux de matière amorphe, tel que déterminé par diffraction des rayons X selon la méthode de Rietveld, est de préférence d'au moins 66%, notamment 90%, et même 95% ou 98% en masse.

Le laitier alumineux granulé broyé est de préférence issu du recyclage par fusion totale de catalyseurs utilisés pour la désulfuration des produits pétroliers, notamment de catalyseurs à base de molybdène et/ou de cobalt. Ces catalyseurs sont recyclés et un certain nombre de déchets ou sous-produits sont obtenus pendant les cycles de recyclage. Un des sous-produits obtenus est un laitier alumineux dont la teneur en silice est inférieure à 30% en poids. Le laitier alumineux comprend de préférence du molybdène ou du cobalt, en une teneur pondérale d'au plus 0,5% exprimée en poids d'oxyde.

Ce sous-produit se présente, à l'issue du recyclage du catalyseur, sous la forme de granulats d'une taille moyenne généralement comprise entre 2 et 5 mm. A ce diamètre, les granulats de laitiers alumineux sont généralement inertes. Afin de les rendre réactifs, il est préférable de les broyer pour obtenir des particules fines. Cette opération de broyage est à prendre en considération pour calculer l'empreinte carbone lors de la fabrication du liant. Toutefois si on la compare à l'empreinte carbone d'un procédé de fabrication d'un ciment alumineux ou sulfoalumineux, l'opération de broyage permet de réduire les émissions de CO₂ de plus de 90%.

Le laitier alumineux granulé broyé se présente de préférence sous forme de granules broyées possédant un diamètre de particules D50 inférieur à 20 µm, de préférence inférieur à 15 µm. Le diamètre D50 est le diamètre tel que 50% en masse des particules ont un diamètre inférieur à cette valeur D50. Cette finesse des particules permet notamment de donner au laitier alumineux granulé une bonne réactivité lui permettant d'être utilisé dans une composition de mortier-colle et d'obtenir les propriétés attendues en termes de temps de prise et de résistance mécanique.

Le laitier alumineux, par son action d'activateur, permet notamment d'améliorer la réactivité du liant à des températures relativement basses, comme par exemple à 5°C.

La base participe également à l'activation du liant hydraulique. Toutefois, les quantités de base nécessaires sont très faibles ce qui permet de considérer le système d'activation comme un système d'activation douce comparativement à des systèmes où il est nécessaire d'ajouter un activateur alcalin en quantité nettement plus importante, provoquant un pH élevé susceptible de provoquer de fortes irritations cutanées lors de la manipulation des produits. Sa teneur est de préférence inférieure à 0,3% en poids par rapport au poids de la composition sèche de mortier.

La base est de préférence choisie parmi les hydroxydes de métal alcalin ou alcalino-terreux, les carbonates de métal alcalin ou alcalino-terreux ou les dérivés de silicate de métal alcalin ou alcalino-terreux. On pourra citer notamment KOH, Ca(OH)₂, Na₂CO₃, K₂CO₃, Li₂CO₃, Na₂SiO₃. Il peut s'agir d'un mélange de bases, de telle sorte que la quantité totale du mélange de bases est inférieure à 0,5%, notamment 0,3%, du poids total de la composition de mortier.

Le dérivé d'aluminosilicate de calcium est de préférence un sous-produit de l'industrie. Avantageusement, l'alumine n'est pas le constituant le plus abondant du dérivé d'aluminosilicate de calcium.

Le dérivé d'aluminosilicate de calcium est de préférence choisi parmi les laitiers de haut fourneau granulés broyés, les cendres volantes telles que les cendres volantes silico-alumineuses, l'argile calcinée et/ou les poussières d'argile expansée, ou les cendres silico-calco-alumineuses notamment de charbon, en particulier de lignite, de charbon subbitumineux, de houille....

De préférence, au moins un dérivé d'aluminosilicate de calcium a une finesse inférieure à 6000 Blaine. Le terme « Blaine » est une unité de mesure de la finesse de mouture d'un ingrédient solide exprimée en cm² par gramme de solide. Cette unité sert à mesurer la surface utile des grains de solide.

Le liant hydraulique peut également comprendre des microparticules de laitier de haut fourneau granulé et broyé dont la finesse est comprise entre 6000 et 15000 Blaine.

La source de sulfate de calcium est avantageusement choisie parmi le plâtre, l'hémihydrate, le gypse et/ou l'anhydrite, seuls ou en mélange.

Le liant hydraulique peut également comprendre des sulfates de métal alcalin tel que le lithium, le sodium et/ou le potassium, préférentiellement en une quantité inférieure ou égale à 0,5% du poids total du de la composition sèche de mortier.

Le liant hydraulique peut également comprendre du ciment Portland, un ciment alumineux et/ou un ciment sulfoalumineux, de préférence en une quantité inférieure ou égale à 1% du poids total de la composition sèche de mortier.

Le liant hydraulique représente de préférence de 5 à 70%, notamment de 10 à 60% du poids total de la composition sèche de mortier. La quantité totale de dérivé d'aluminosilicate de calcium (autre que le laitier alumineux) est de préférence comprise entre 20 et 50% en poids par rapport à la composition sèche de mortier. La quantité totale de laitier alumineux granulé broyé est de préférence comprise entre 0,5 et 3% du poids total de la composition sèche de mortier. La quantité totale de source de sulfate de calcium est de préférence comprise entre 0,5 et 4 %, notamment entre 1 et 3% du poids total de la composition sèche de mortier.

Les fillers sont des matières minérales inertes finement broyées, de type calcaires ou siliceuses. Leur teneur est généralement comprise entre 0 et 30% poids par rapport à la composition sèche de mortier. Les granulats utilisés généralement dans les compositions de mortier ont un diamètre inférieur à 8 mm. Les granulats sont des grains minéraux, notamment des grains de pierre, graviers, gravillons, cailloux et/ou sables. La teneur en granulats varie de préférence entre 20 et 95% en poids par rapport à la composition sèche de mortier.

La composition est une composition sèche puisque la majorité de ses constituants sont sous forme pulvérulente. Les pourcentages de chacun des constituants sont donnés en pourcentages massiques par rapport à la totalité des composants de ladite composition.

La composition peut également comprendre un ou plusieurs additifs, choisis parmi des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques. La teneur totale en additifs et adjuvants varie classiquement entre 0,001 et 10% en poids par rapport au poids total de la composition sèche de mortier.

La présence de ces différents additifs permet notamment d'adapter le temps de prise ou la rhéologie de la composition de mortier humide, c'est-à-dire après gâchage avec de l'eau, de sorte à répondre aux attentes en fonction du produit souhaité.

La présente invention porte également sur un procédé de préparation d'une composition de mortier humide, notamment une composition de mortier-colle, par gâchage avec de l'eau de la composition sèche de mortier selon l'invention. La présence de laitier alumineux comme activateur permet avantageusement d'accélérer la cinétique de durcissement de la composition de mortier, aussi bien à 20°C qu'à plus basse température, par exemple à 5°C.

Les exemples ci-après illustrent l'invention sans en limiter la portée.

Un laitier alumineux granulé broyé, issu du recyclage par fusion totale de catalyseurs de désulfurisation des produits pétroliers à base de cobalt et de molybdène, est utilisé dans les exemples suivants. Les constituants principaux de ce laitier sont l'alumine (41%), la chaux (32,6%), la silice (12,6%), l'oxyde de magnésium (8,9%), l'oxyde de fer (1,6%) et le soufre (1,6%). D'autres oxydes notamment de molybdène, de nickel, de cobalt, de chrome, de vanadium, de zinc, de manganèse, de phosphore, de potassium, de titane, ainsi que du chlore sont également présents dans le laitier, mais en des teneurs minimes, inférieures à 0,5%.

Les granules de ce laitier alumineux qui possèdent un diamètre maximum de 5 mm ont été broyées, pour obtenir une finesse équivalente à celle d'un ciment. La distribution granulométrique du laitier alumineux granulé broyé est la suivante : D₁₀ de 0,7 µm, D₅₀ de 10 µm et D₉₀ de 34 µm.

Ce laitier alumineux granulé broyé a été utilisé dans les exemples suivants, en tant qu'activateur du liant hydraulique.

Différentes formulations de compositions de mortier ont été préparées en mélangeant les constituants dans les proportions indiquées ci-après dans le tableau 1. La composition 1 est donnée à titre comparatif et ne contient pas le laitier alumineux granulé broyé jouant le rôle d'activateur. Les compositions 2 et 3 sont des compositions de mortier selon la présente invention.

**Tableau 1**

| Composants en % | Composition 1 | Composition 2 | Composition 3 |
|---|---|---|---|
| Laitier (4500 Blaine) | 35 | 35 | 35 |
| Laitier (Blaine >6500) | 4,5 | 4,5 | 0,0 |
| Filler calcaire fin | 5 | 5 | 9,5 |
| Ether de cellulose | 0,40 | 0,40 | 0,40 |
| Poudre de polymère (copolymère d'acétate de vinyle d'éthylène) | 3,50 | 3,50 | 3,50 |
| Sable siliceux | 48,9 | 47,4 | 47,4 |
| Sulfate de calcium | 1,5 | 1,5 | 1,5 |
| Sulfate alcalin | 0,1 | 0,1 | 0,1 |
| Carbonate alcalin | 0,1 | 0,1 | 0,1 |
| Ciment Portland | 0,9 | 0,9 | 0,9 |
| Laitier alumineux granulé broyé | 0 | 1,5 | 1,5 |
| Chaux | 0,1 | 0,1 | 0,1 |

Ces mélanges pulvérulents ont été gâchés avec de l'eau avec un taux de gâchage de 26%, à une température de 20°C.

Des essais ont été effectués sur les mortiers de compositions sèches données dans le tableau 1 ; ils sont résumés dans le tableau 2 ci-après.

La consistance du mortier colle est évaluée en mesurant la viscosité Brookfield.

L'adhérence initiale correspond à un test de résistance à la traction effectué selon la méthode décrite dans la norme EN 12004. La résistance à l'arrachement exprimée en MPa est mesurée par arrachement après 24h, selon la méthode décrite dans la norme EN 1348 § 8.2.

Les temps de prises sont donnés en mesurant le début de prise et la fin de prise Vicat.

Le délai de jointoiement est le délai après lequel les carreaux sont suffisamment maintenus pour permettre une remise en circulation du local et la réalisation des joints. Afin de l'estimer dans des conditions les plus défavorables, il est réalisé à 5°C et en simulant un essai de rénovation sur ancien carrelage non poreux. Des carreaux sont collés au peigne 9*9*9 mm³ sur une maquette en faïence émaillée. Le délai de jointoiement est défini en déterminant qualitativement le moment où il devient impossible de bouger les carreaux en appliquant un effort de cisaillement.

**Tableau 2**

| | Composition 1 | Composition 2 | Composition 3 |
|---|---|---|---|
| Viscosité (Pa.s) | 400 | 470 | 380 |
| Adhérence initiale 24h (MPa) | 0,3 | 0,5 | 0,4 |
| Temps de prise (h) début de prise /fin de prise à 20°C | 13/14 | 7/8,5 | 7,5/9 |
| Délai de jointoiement à 5°C sur ancien carrelage | 72h | < 24h | < 24h |

L'activation par le laitier alumineux granulé broyé permet d'accélérer fortement la cinétique de durcissement à 20°C et également à 5°C. Le délai de jointoiement, même dans des conditions très défavorables (application à 5°C sur un ancien carrelage) est ramené de 72h à moins de 24h, soit à un niveau de performance équivalent à celui d'une formulation classique de mortier colle à base de ciment Portland.

## Revendications

1. Composition sèche de mortier comprenant :
- un liant hydraulique comprenant au moins un dérivé d'aluminosilicate de calcium, au moins un laitier alumineux granulé broyé comprenant moins de 30% en poids de silice, ledit laitier alumineux étant un laitier dont l'alumine est le constituant le plus abondant, la quantité totale de dérivé d'aluminosilicate de calcium autre que le laitier alumineux étant comprise entre 5 et 60% en poids par rapport à la composition sèche de mortier et la quantité totale de laitier alumineux granulé broyé étant comprise entre 0,1 et 5% du poids total de la composition sèche de mortier, et au moins une source de sulfate de calcium,
- des granulats et/ou des fillers, et
- au moins une base en une quantité inférieure ou égale à 0,5% du poids total de la composition sèche de mortier.

2. Composition de mortier selon la revendication précédente, telle que le laitier alumineux granulé broyé comprend entre 30% en poids et 60% en poids d'alumine, de préférence entre 32 et 45% en poids d'alumine.

3. Composition de mortier selon l'une des revendications précédentes, dans laquelle la teneur en silice du laitier alumineux granulé broyé est comprise entre 5 et 25% en poids, notamment entre 10 et 20%.

4. Composition de mortier selon l'une des revendications précédentes, telle que le laitier alumineux granulé broyé est majoritairement amorphe.

5. Composition de mortier selon l'une des revendications précédentes, telle que le laitier alumineux granulé broyé est issu du recyclage par fusion totale de catalyseurs utilisés pour la désulfuration des produits pétroliers, notamment de catalyseurs à base de molybdène et/ou de cobalt.

6. Composition de mortier selon l'une des revendications précédentes, telle que la quantité totale de laitier alumineux granulé broyé est comprise entre 0,5 et 3 % du poids total de la composition sèche de mortier.

7. Composition de mortier selon l'une des revendications précédentes, telle que le dérivé d'aluminosilicate de calcium est choisi parmi les laitiers de haut fourneau granulés broyés, les cendres volantes telles que les cendres volantes silico-alumineuses, l'argile calcinée et/ou les poussières d'argile expansée, ou les cendres silico-calco-alumineuses notamment de charbon, en particulier de lignite, de charbon subbitumineux ou de houille.

8. Composition de mortier selon la revendication précédente, telle qu'au moins un dérivé d'aluminosilicate de calcium a une finesse inférieure à 6000 Blaine.

9. Composition de mortier selon l'une des revendications précédentes, telle que le liant comprend des microparticules de laitier de haut fourneau granulé et broyé dont la finesse est comprise entre 6000 et 15000 Blaine.

10. Composition de mortier selon l'une des revendications précédentes, telle que le liant hydraulique comprend du ciment Portland, en une quantité inférieure à 1% du poids total de la composition sèche de mortier.

11. Composition de mortier selon l'une des revendications précédentes, dans laquelle la source de sulfate de calcium est choisie parmi le plâtre, l'hémihydrate, le gypse et/ou l'anhydrite, seuls ou en mélange.

12. Composition de mortier selon l'une des revendications précédentes, dans laquelle la base est choisie parmi les hydroxydes de métal alcalin ou alcalino-terreux, les carbonates de métal alcalin ou alcalino-terreux ou les dérivés de silicate de métal alcalin ou alcalino-terreux.

13. Composition de mortier selon l'une des revendications précédentes, comprenant en outre un ou plusieurs additifs, choisi parmi des agents rhéologiques, des agents rétenteurs d'eau, des agents entraîneurs d'air, des agents épaississants, des agents de protection biocides, des agents dispersants, des pigments, des accélérateurs et/ou des retardateurs, des résines polymériques.

14. Procédé de préparation d'une composition de mortier humide, notamment une composition de mortier colle, par gâchage avec de l'eau de la composition sèche de mortier selon l'une des revendications précédentes.

## Patentansprüche

1. Trockene Mörtelzusammensetzung, umfassend:
- ein hydraulisches Bindemittel, umfassend mindestens ein Calciumaluminosilicatderivat, mindestens eine zerkleinerte granulierte Aluminiumschlacke, umfassend zu weniger als 30 Gew.-% Siliciumdioxid, wobei die Aluminiumschlacke eine Schlacke ist, deren Hauptbestandteil Aluminiumoxid ist, wobei die Gesamtmenge an Calciumaluminosilicatderivat, abgesehen von der Aluminiumschlacke, zwischen 5 und 60 Gew.-%, bezogen auf die trockene Mörtelzusammensetzung, liegt und die Gesamtmenge an zerkleinerter granulierter Aluminiumschlacke zwischen 0,1 und 5 % des Gesamtgewichts der trockenen Mörtelzusammensetzung liegt, und mindestens eine Calciumsulfatquelle,
- Granulate und/oder Füllstoffe, und
- mindestens eine Base in einer Menge kleiner als oder gleich 0,5 % des Gesamtgewichts der trockenen Mörtelzusammensetzung.

2. Mörtelzusammensetzung nach dem vorstehenden Anspruch, wobei die zerkleinerte granulierte Aluminiumschlacke zwischen 30 Gew.-% und 60 Gew.-% Aluminiumoxid, vorzugsweise zwischen 32 und 45 Gew.-% Aluminiumoxid umfasst.

3. Mörtelzusammensetzung nach einem der vorstehenden Ansprüche, wobei der Kieselsäuregehalt der zerkleinerten granulierten Aluminiumschlacke zwischen 5 und 25 Gew.-%, insbesondere zwischen 10 und 20 % liegt.

4. Mörtelzusammensetzung nach einem der vorstehenden Ansprüche, wobei die zerkleinerte granulierte Aluminiumschlacke überwiegend amorph ist.

5. Mörtelzusammensetzung nach einem der vorstehenden Ansprüche, wobei die zerkleinerte granulierte Aluminiumschlacke aus der Wiederverwertung durch vollständige Fusion von Katalysatoren stammt, die für die Entschwefelung von Erdölprodukten verwendet werden, insbesondere Katalysatoren auf Molybdän- und/oder Kobaltbasis.

6. Mörtelzusammensetzung nach einem der vorstehenden Ansprüche, wobei die Gesamtmenge an zerkleinerter granulierter Aluminiumschlacke zwischen 0,5 und 3 % des Gesamtgewichts der trockenen Mörtelzusammensetzung liegt.

7. Mörtelzusammensetzung nach einem der vorstehenden Ansprüche, wobei das Calciumaluminosilicatderivat aus zerkleinerten granulierten Hochofenschlacken, Flugaschen wie aluminiumsilicathaltigen Flugaschen, kalziniertem Ton und/oder Blähtonstäuben oder Aluminiumcalciumsilikataschen ausgewählt ist, insbesondere aus Kohle, im Besonderen aus Braunkohle, subbituminöser Kohle oder Steinkohle.

8. Mörtelzusammensetzung nach dem vorstehenden Anspruch, wobei mindestens ein Calciumaluminosilicatderivat eine Feinheit von weniger als 6000 Blaine aufweist.

9. Mörtelzusammensetzung nach einem der vorstehenden Ansprüche, wobei das Bindemittel Mikropartikel aus granulierter und zerkleinerter Hochofenschlacke umfasst, deren Feinheit zwischen 6000 und 15.000 Blaine liegt.

10. Mörtelzusammensetzung nach einem der vorstehenden Ansprüche, wobei das hydraulische Bindemittel Portlandzement in einer Menge von weniger als 1 % des Gesamtgewichts der trockenen Mörtelzusammensetzung umfasst.

11. Mörtelzusammensetzung nach einem der vorstehenden Ansprüche, bei der die Calciumsulfatquelle aus Gipskalk, Halbhydrat, Gips und/oder Anhydrit, allein oder als Mischung, ausgewählt ist.

12. Mörtelzusammensetzung nach einem der vorstehenden Ansprüche, bei der die Base aus Alkalimetall- oder Erdalkalihydroxiden, Alkalimetall- oder Erdalkalicarbonaten oder Alkalimetall- oder Erdalkalisilicatderivaten ausgewählt ist.

13. Mörtelzusammensetzung nach einem der vorstehenden Ansprüche, umfassend ferner einen oder mehrere Zusatzstoffe, die aus rheologischen Mitteln, Wasserrückhaltemitteln, Luftporenbildnern, Verdickungsmitteln, bioziden Schutzmitteln, Dispergiermitteln, Pigmenten, Beschleunigern und/oder Verzögerern, Polymerharzen ausgewählt sind.

14. Verfahren zum Herstellen einer Nassmörtelzusammensetzung, insbesondere einer Klebemörtelzusammensetzung, durch Anmachen der trockenen Mörtelzusammensetzung nach einem der vorstehenden Ansprüche mit Wasser.

## Claims

1. A dry mortar composition comprising:
- a hydraulic binder comprising at least one calcium aluminosilicate derivative, at least one ground granulated high-alumina slag comprising less than 30% by weight of silica, said high-alumina slag being a slag wherein alumina is the most abundant constituent, the total amount of calcium aluminosilicate derivative other than the high-alumina slag being between 5% and 60% by weight relative to the dry mortar composition and the total amount of ground granulated high-alumina slag being between 0.1% and 5% of the total weight of the dry mortar composition, and at least one source of calcium sulfate,
- aggregates and/or fillers, and
- at least one base in an amount of less than or equal to 0.5% of the total weight of the dry mortar composition.

2. The mortar composition as claimed in the preceding claim, such that the ground granulated high-alumina slag comprises between 30% by weight and 60% by weight of alumina, preferably between 32% and 45% by weight of alumina.

3. The mortar composition as claimed in either of the preceding claims, in which the silica content of the ground granulated high-alumina slag is between 5% and 25% by weight, in particular between 10% and 20% by weight.

4. The mortar composition as claimed in one of the preceding claims, such that the ground granulated high-alumina slag is predominantly amorphous.

5. The mortar composition as claimed in one of the preceding claims, such that the ground granulated high-alumina slag is derived from the recycling, by complete melting, of catalysts used for the desulfurization of petroleum products, in particular of catalysts based on molybdenum and/or cobalt.

6. The mortar composition as claimed in one of the preceding claims, such that the total amount of ground granulated high-alumina slag is between 0.5% and 3% of the total weight of the dry mortar composition.

7. The mortar composition as claimed in one of the preceding claims, such that the calcium aluminosilicate derivative is chosen from ground granulated blast-furnace slags, fly ash such as aluminosilicate fly ash, calcined clay and/or expanded clay dust, or calcium aluminosilicate fly ash, in particular of coal, in particular of lignite, of sub-bituminous coal or of bituminous coal.

8. The mortar composition as claimed in the preceding claim, such that at least one calcium aluminosilicate derivative has a fineness of less than 6000 Blaine.

9. The mortar composition as claimed in one of the preceding claims, such that the binder comprises microparticles of ground granulated blast-furnace slag, the fineness of which is between 6000 and 15000 Blaine.

10. The mortar composition as claimed in one of the preceding claims, such that the hydraulic binder comprises Portland cement, in an amount of less than 1% of the total weight of the dry mortar composition.

11. The mortar composition as claimed in one of the preceding claims, wherein the source of calcium sulfate is chosen from plaster, hemihydrate, gypsum and/or anhydrite, alone or as a mixture.

12. The mortar composition as claimed in one of the preceding claims, wherein the base is chosen from alkali or alkaline-earth metal hydroxides, alkali or alkaline-earth metal carbonates or alkali or alkaline-earth metal silicate derivatives.

13. The mortar composition as claimed in one of the preceding claims, further comprising one or more additives, chosen from rheological agents, water-retaining agents, air-entraining agents, thickeners, biocidal protecting agents, dispersants, pigments, accelerators and/or retarders, or polymeric resins.

14. A process for preparing a wet mortar composition, in particular an adhesive mortar composition, by mixing the dry mortar composition as claimed in one of the preceding claims with water.
